# EUROPÄISCHE PATENTSCHRIFT

(11) **EP 3 391 007 B1**
(45) Veröffentlichungstag und Bekanntmachung des Hinweises auf die Patenterteilung: **26.04.2023**
(21) Anmeldenummer: 16822150.5
(22) Anmeldetag: 16.12.2016
(51) Int. Cl.: B21C 1/22, G01M 5/00, F17D 5/02, F17D 5/06, B21C 37/15

(54) **SENSOR FÜR EINE HOCHDRUCKLEITUNG SOWIE VERFAHREN ZU SEINER HERSTELLUNG**
SENSOR FOR HIGH PRESSURE PIPE AND ITS FABRICATION METHOD
CAPTEUR POUR TUYAU À HAUTE PRESSION ET SON PROCÉDÉ DE FABRICATION

(30) Priorität: 18.12.2015 DE 102015122296
(43) Veröffentlichungstag der Anmeldung: 24.10.2018
(73) Patentinhaber: Alleima GmbH, 33824 Werther (DE)
(72) Erfinder: RAUFFMANN, Udo, 33824 Werther (DE); HEDVALL, Christofer, 33615 Bielefeld (DE); FROBÖSE, Thomas, 33775 Versmold (DE)
(74) Vertreter: Setréus, Ellen
(86) Internationale Anmeldenummer: PCT/EP2016/081539
(87) Internationale Veröffentlichungsnummer: WO 2017/103181

(56) Entgegenhaltungen:
- WO-A1-2006/034724
- CN-A- 102 606 841
- US-A- 5 343 738
- US-B1- 6 463 813

## Beschreibung

Die vorliegende Erfindung betrifft einen Sensor für eine Hochdruckleitung sowie ein Verfahren zu seiner Herstellung.

In vielen technischen Bereichen wie zum Beispiel in der Hochdrucktechnik und der chemischen Industrie werden Rohrleitungen eingesetzt, die mit Fluiden mit sehr hohen Drücken beaufschlagt werden und diesen hohen Drücken langfristig standhalten müssen. Dabei wird zwischen einer statischen, d.h. zeitlich und räumlich konstanten, und einer dynamischen, d.h. zeitlich und/oder räumlich variierenden, Druckbelastung der Hochdruckleitungen unterschieden. In vielen technischen Anwendungsbereichen werden die druckführenden Bauteile meist einer zeitlich und räumlich variierenden, teils auch periodisch pulsierenden Druckbelastung ausgesetzt, sodass sie je nach Belastungsstufe deutlich höheren Anforderungen unterliegen im Vergleich zu statisch druckbelasteten Bauteilen. Dies führt bei gleicher Bauart dazu, dass dynamisch mit Druck belastete Bauteile schneller verschleißen und häufiger ausgetauscht werden müssen als dies bei statisch druckbelasteten Bauteilen der Fall ist.

Während die statische Druckfestigkeit von Bauteilen unter anderem von den mechanischen Eigenschaften wie der Dehngrenze und der Zugfestigkeit des verwendeten Materials abhängt, kommen für eine dynamische Druckfestigkeit noch weitere bedeutende Größen hinzu, wie zum Beispiel die Duktilität (Bruchdehnung) des Materials, die Tiefe von bereits vorhandenen Rissen in der Wand des Bauteils, dem Mikrogefüge des Materials sowie der Oberflächengüte des Bauteils.

Das Versagen von Rohren und anderen Bauteilen tritt in der Regel in Folge eines kritischen Wachstums eines Risses ein, zum Beispiel indem sich ein Riss von der Rohrinnenfläche bis zur Rohraußenfläche fortpflanzt. Dabei kann der Riss durch lokale Spannungskonzentrationen, zum Beispiel an Materialdefekten in Form von Gitterfehlern und an rauen Oberflächen durch Spannungsspitzen, entstehen, oder bereits vorhandene Anrisse setzen sich in Folge der Druckbelastung weiter fort. Demzufolge wird der Verschleiß von dynamisch druckbelasteten Bauteilen unter anderem von dem Wachstum von Rissen pro Druckstoß sowie den Materialeigenschaften bestimmt, wobei eine gute Oberflächenqualität die Wahrscheinlichkeit der Entstehung eines Risses deutlich verringern kann.

Zur Erreichung einer hohen Druckbeständigkeit insbesondere von Rohren, die einer dynamischen Druckbelastung im Betrieb unterliegen, werden die Werkstoffe der herzustellenden Rohre dahingehend ausgewählt, dass sie die zuvor genannten über die Druckbeständigkeit entscheidenden Eigenschaften optimieren. Zudem erfolgt häufig eine nachträgliche Veränderung der Materialeigenschaften, insbesondere durch eine Autofrettage.

Die WO 2006/034724 A1 offenbart ein doppelwandiges Rohr mit einem inneren Hochdruckrohr mit einem Durchflussraum für gefährliche und/oder entflammbare Flüssigkeiten mit einem äußeren Schutzrohr, das koaxial um das Innenohr angeordnet ist, wobei das doppelwandige Rohr einen äußeren Durchflussraum zwischen dem Innenohr und dem Außenrohr aufweist. Dieser äußere Durchflussraum dient zur Aufnahme von aus dem Innenohr austretender Flüssigkeit, wobei das Schutzrohr mehrere im Wesentlichen in Längsrichtung angeordneten Nuten in seiner Innenfläche aufweist.

Die CN 1002606841 A offenbart ein doppelwandiges Rohr zum Aufnehmen von Schiffsöl, wobei zwischen einem Innenohr und einem Außenrohr eine Nut mit einem Sensor zum Überwachen des von der Nut gebildeten Zwischenraumes vorgesehen ist.

Aus der US 6,463,813 B1 ist zudem ein Rohr mit einem Innenrohr und einem Außenrohr bekannt, wobei in einer Innenwand des Außenrohrs Nuten zur Aufnahme von Leckageflüssigkeit vorgesehen sind. Außenrohr und Innenrohr sind durch Verbiegen des Rohrs miteinander verbunden.

Während zwischenzeitlich Hochdruckleitungen verfügbar sind, welche eine Druckbeständigkeit der Rohre von mindestens 15000 bar aufweisen, fehlt es derzeit noch an geeigneten Sensoren, welche Parameter des die Hochdruckleitung oder das Hochdruckrohr beaufschlagenden Fluids erfassen können. Für eine industrielle Handhabung in Prozessen, beispielsweise Fertigungsprozessen, ist es jedoch notwendig, dass geeignete Sensoren zur Verfügung stehen. Dem gegenüber ist es Aufgabe der vorliegenden Erfindung, einen Sensor für eine Hochdruckleitung bereitzustellen, der geeignet ist, Parameter bzw. Eigenschaften eines in einer Hochdruckleitung geführten Fluids zu erfassen, wobei der Sensor selbst den hohen Drücken des Fluids standhält.

Zudem ist es Aufgabe der vorliegenden Erfindung, ein Verfahren zum Herstellen eines Sensors bereitzustellen, der zumindest einen der zuvor genannten Nachteile beseitigt.

Zumindest eine der zuvor genannten Aufgaben wird erfindungsgemäß durch einen Sensor für eine Hochdruckleitung gelöst mit einem Außenrohr aus Metall mit einer Außenfläche, einer Innenfläche, einem Außendurchmesser und einem Innendurchmesser, einem Innenrohr aus Metall mit einer Außenfläche, einer Innenfläche, einem Außendurchmesser und einem Innendurchmesser, wobei sich das Innenrohr konzentrisch in dem Außenrohr erstreckt, sodass das Innenrohr und das Außenrohr gemeinsam ein Rohr bilden, und wobei eine Gesamtwandstärke des Rohrs gemessen als eine Hälfte einer Differenz zwischen dem Außendurchmesser des Außenrohrs und dem Innendurchmesser des Innenrohrs gleich oder größer als der Innendurchmesser des Innenrohrs ist, zumindest einer sich in der Außenfläche des Außenrohrs oder in der Außenfläche des Innenrohrs in einer Längsrichtung des Rohrs erstreckenden Nut, zumindest einer in der Nut angeordneten Signalleitung, zumindest einem mit der Signalleitung verbundenen Aufnehmer, wobei der Aufnehmer zumindest in der Nut oder zumindest einer zusätzlich zu der mindestens einen Nut zumindest in die Außenfläche des Innenrohrs oder in die Innenfläche des Außenrohrs eingebrachten Ausnehmung angeordnet ist und wobei das Außenrohr kraftschlüssig auf dem Innenrohr sitzt, wobei der Sensor ein Drucksensor ist und wobei das Außenrohr kraftschlüssig auf dem Innenrohr sitzt.

Im Sinne der vorliegenden Erfindung wird in einer Ausführungsform unter einer Hochdruckleitung eine Leitung verstanden, die Drücken von 15000 bar oder mehr, in einer Ausführungsform von 18000 bar oder mehr und in einer weiteren Ausführungsform von 22000 bar oder mehr standhält.

Der Sensor für eine solche Hochdruckleitung im Sinne der vorliegenden Anmeldung umfasst ein Rohr, welches aus einem Außenrohr und einem Innenrohr besteht, wobei sich das Innenrohr konzentrisch in dem Außenrohr erstreckt und mindestens einem Messaufnehmer zwischen dem Innenrohr und dem Außenrohr, wobei der Messaufnehmer über eine zum Sensor gehörende Signalleitung mit einer elektronischen Einrichtung verbindbar ist.

Der Aufnehmer kann ebenfalls in der Nut vorgesehen sein oder alternativ in einer zusätzlichen, sich an die Nut anschließenden, entweder in der Außenfläche des Innenrohrs oder in der Innenfläche des Außenrohrs eingebrachten Ausnehmung aufgenommen sein. Es sind auch Ausführungsformen denkbar, bei welchen sich der Aufnehmer sowohl in der Nut als auch in einer sich an die Nut anschließenden Ausnehmung erstreckt.

Diese Signalleitung ist ebenfalls zwischen dem Innenrohr und dem Außenrohr angeordnet. Zur Aufnahme der Signalleitung ist eine Nut vorgesehen, die entweder in die Außenfläche des Innenrohrs oder die Innenfläche des Außenrohrs eingebracht ist, sodass sie sich im Wesentlichen in Längsrichtung des Rohrs erstreckt. Es sind jedoch auch Ausführungsformen denkbar, bei welchen sowohl die Außenfläche des Innenrohrs als auch die Innenfläche des Außenrohrs jeweils eine Nut aufweisen. Zweckmäßigerweise sind zwei solche Nuten an der gleichen Umfangsposition angeordnet, sodass ein größerer Raum zur Aufnahme der Signalleitung gebildet wird.

Kraftschlüssige Verbindungen entstehen grundsätzlich durch die Übertragung von Kräften, zum Beispiel in Form von Druckkräften oder Reibungskräften. Dabei wird der Zusammenhalt der kraftschlüssigen Verbindung rein durch die wirkende Kraft gewährleistet.

Um die erforderliche Druckbeständigkeit des Rohrs, welches einen elementaren Teil des Sensors bildet, bereitzustellen, ist das Rohr, welches von dem Innenrohr und dem Außenrohr gebildet wird, ein sogenanntes Hochdruckrohr, dessen Gesamtwandstärke, die sich berechnet als die Hälfte der Differenz zwischen dem Außendurchmesser des Außenrohrs und dem Innendurchmesser des Innenrohrs, gleich oder größer als der Innendurchmesser des Innenrohrs ist.

In einer weiteren Ausführungsform der vorliegenden Erfindung weist das herzustellende Rohr nach dem gemeinsamen Ziehen des Innenrohres und des Außenrohres durch die erste Ziehmatrize eine Gesamtwandstärke, die sich berechnet als die Hälfte der Differenz zwischen dem Außendurchmesser des Außenrohrs und dem Innendurchmesser des Innenrohrs, von mindestens einem Drittel des Außendurchmessers des Außenrohres auf. Eine derartige Wanddicke sorgt für eine große Stabilität des Rohres und ermöglicht es somit, das Rohr als Hochdruckrohr zu verwenden, so dass es Drücken jenseits der 10.000 bar standhält ohne zu zerbersten.

Da das Rohr als Bestandteil des erfindungsgemäßen Sensors aus Innenrohr und Außenrohr zusammengefügtwird, ist es zudem essenziell, dass das Außenrohr kraftschlüssig auf dem Innenrohr sitzt, sodass das Innenrohr bei Druckbeaufschlagung keine übermäßige Dehnung, beispielsweise in einen Abstand zwischen Innenrohr und Außenrohr, erfahren kann, die letztendlich zum Bersten des Rohrs und damit zur Zerstörung des Sensors führt. Dabei ist es zweckmäßig, wenn in einer Ausführungsform der Erfindung der Kraftschluss zwischen Außenrohr und Innenrohr über die gesamte Länge des Rohrs bereitgestellt wird.

In einer Ausführungsform der Erfindung ist das Innenrohr ein kaltverfestigtes Rohr mit einer Zugfestigkeit von 900 N oder mehr. Eine solche Zugfestigkeit ist erforderlich, damit das Innenrohr den hohen Drücken in den Bereichen standhalten kann, in denen in der Außenfläche des Innenrohrs oder in der Innenfläche des Außenrohrs Nuten und/oder Ausnehmungen vorgesehen sind. In diesen Bereichen kann sich das Innenrohr in einem gewissen Rahmen dehnen. In einer Ausführungsform der Erfindung beträgt die Zugfestigkeit des kaltverfestigten Innenrohrs 1050 N oder mehr.

Dabei wird unter der Zugfestigkeit die maximale mechanische Zugspannung verstanden, die der Werkstoff des Innenrohrs aushält, bevor er bricht oder reißt.

In einer Ausführungsform des erfindungsgemäßen Verfahrens ist ein Material zumindest des Innenrohres oder des Außenrohres aus einer Gruppe bestehend aus einem unlegierten Stahl, einem niedriglegierten Stahl und einem hochlegierten Stahl oder einer Kombination davon ausgewählt. In einer Ausführungsform handelt es sich bei dem Material um einen hochlegierten Stahl. In einer weiteren Ausführungsform ist zumindest das Innenrohr oder das Außenrohr aus HP 160 hergestellt.

In der Hochdrucktechnik werden unterschiedliche metallische Werkstoffe für die Herstellung von Rohren und anderen Bauteilen verwendet. Dabei handelt es sich hauptsächlich um unlegierte, niedriglegierte und hochlegierte Stähle. Besonders hohe dynamische Druckbeständigkeit wird bei Rohren oder anderen Bauteilen aus hochlegiertem Stahl erreicht, welche kaltverfestigt oder vergütet und anschließend prägepoliert wurden. HP 160 ist ein hochfester stickstofflegierter austenitischer Edelstahl, der sich gegenüber den Standardwerkstoffen in einer verbesserten Korrosionsbeständigkeit, einem hohen Reinheitsgrad, einer guten Umformbarkeit und der Möglichkeit, diesen Werkstoff bis zu 12.000 bar autofrettieren zu können, auszeichnet. Aufgrund seiner chemischen Zusammensetzung und seiner hohen Reinheit besitzt HP 160 eine sehr gute Beständigkeit gegen interkristalline Korrosion und Wasserstoffversprödung. Der hohe Molybdängehalt bewirkt eine gute Beständigkeit gegen Lochfraß und Kontaktkorrosion sowie Spannungsrisskorrosion. Demnach ist HP 160 ein bevorzugter Werkstoff für die Herstellung von Rohren mit hoher dynamischer Druckbeständigkeit.

In einer Ausführungsform der vorliegenden Erfindung ist das Innenrohr korrosionsbeständig. Dieses Merkmal ist für den Einsatz in der Hochdrucktechnik vorteilhaft, da eine einsetzende Korrosion, d.h. eine fortschreitende Zersetzung, des Innenrohres zu einer Beeinträchtigung von dessen Druckbeständigkeit führen würde.

In einer Ausführungsform der vorliegenden Erfindung bestehen das Innenrohr und das Außenrohr aus dem gleichen Werkstoff. Dies führt dazu, dass Innenrohr und Außenrohr infolge der durch das gemeinsame Ziehen durch die erste Ziehmatrize bewirkten kraftschlüssigen Verbindung des Innenrohres mit dem Außenrohr eine sehr stabile Verbindung miteinander eingehen. Unter mikroskopischer Betrachtung liegt sowohl im Innenrohr als auch im Außenrohr im Fall des Bestehens aus dem gleichen Werkstoff die gleiche Gitterstruktur im Metallgefüge vor, so dass sich die Gitterstrukturen an der äußeren Mantelfläche des Innenrohres und an der inneren Mantelfläche des Außenrohres sehr gut miteinander kombinieren lassen.

Um bestimmte Größen bzw. Eigenschaften eines Fluids, welches in dem Rohr geführt wird, mit Messaufnehmern zu erfassen, die zwischen Innenrohr und Außenrohr angeordnet sind, muss das Innenrohr eine gewisse Dehnung aufweisen, um zum Beispiel eine Kraft in den Bauraum zwischen Innenrohr und Außenrohr übertragen zu können. Dies ist insbesondere erforderlich, wenn der erfindungsgemäße Sensor ein Drucksensor ist. Gegenüber dem Innenrohr darf das Außenrohr nur eine geringere Dehnung aufweisen, um Dehnungen des Innenrohrs auffangen zu können, bzw. diesen standzuhalten und dem Rohr die erforderliche Gesamtdruckfestigkeit zu geben. Daher weist in einer Ausführungsform der Erfindung das Innenrohr eine größere Dehnung auf als das Außenrohr. In einer Ausführungsform der Erfindung beträgt dabei die Dehnung des Innenrohrs 20 % oder mehr.

In einer Ausführungsform der Erfindung beträgt der Innendurchmesser des Innenrohrs 10 mm oder weniger. Es versteht sich, dass je geringer der Innendurchmesser des Innenrohrs und damit der Innendurchmesser des Gesamtrohrs ist, desto höher die Drücke sind, denen das Rohr standhalten kann. Daher beträgt in einer Ausführungsform der Erfindung der Innendurchmesser des Innenrohrs 2 mm oder weniger und in einer weiteren Ausführungsform 1,5 mm oder weniger.

In einer weiteren Ausführungsform der Erfindung beträgt die Gesamtwandstärke des Rohrs aus Innenrohr und Außenrohr mindestens 3 mm. Es versteht sich, dass die Druckfestigkeit eines Rohrs bei einem als konstant angenommenen Innendurchmesser des Innenrohrs mit zunehmender Wandstärke ebenfalls zunimmt. Daher beträgt in einer Ausführungsform der Erfindung die Gesamtwandstärke des Rohrs 6 mm oder mehr.

Auch die Außengestaltung der Nut in der Außenfläche des Innenrohrs oder in der Innenfläche des Außenrohrs kann in einer Ausführungsform einen Einfluss auf die Druckbeständigkeit des Rohrs und damit des Sensors haben. In einer Ausführungsform der Erfindung weist die mindestens eine Nut in einer Umfangsrichtung des Außenrohrs oder des Innenrohrs eine Breite und in radialer Richtung des Außenrohrs und des Innenrohrs eine Tiefe auf, wobei die Breite geringer ist als die Tiefe der Nut.

In einer Ausführungsform ist der Sensor ein Dehnungssensor, welcher eine Dehnung des Innenrohrs erfasst, um beispielsweise eine Überbelastung des Rohrs vorzeitig signalisieren zu können. In einer solchen Ausführungsform ist der Messaufnehmer beispielsweise ein Dehnungsmessstreifen. In noch einer weiteren Ausführungsform ist der Sensor ein Drucksensor, wobei der Messaufnehmer beispielsweise von einem Kraftaufnehmer, insbesondere einem Dehnungsmessstreifen, gebildet wird.

Der Sensor ist ein Drucksensor wobei der zumindest eine Aufnehmer ein Kraftaufnehmer ist, und der Kraftaufnehmer mit dem Innenrohr in Eingriff steht, um eine auf das Innenrohr ausgeübte Kraft, welche durch den Druck eines in dem Rohr geführten Fluids bewirkt wird, zu erfassen.

Der Sensor weist in einer Ausführungsform der Erfindung drei sich zumindest in der Innenfläche des Außenrohrs oder in der Außenfläche des Innenrohrs in einer Längsrichtung des Rohrs erstreckende Nuten auf, wobei in jeder der drei Nuten mindestens eine Signalleitung angeordnet ist, wobei jeweils ein mit mindestens einer Signalleitung verbundener Kraftaufnehmer zumindest in einer der drei Nuten oder in drei sich an jeweils einer der Nuten anschließenden Ausnehmungen angeordnet ist und wobei die Aufnehmer in Längsrichtung des Rohrs derart angeordnet sind, dass es eine Querschnittsebene senkrecht zu der Längsrichtung des Rohrs gibt, die alle drei Aufnehmer schneidet. Während eine solche Ausgestaltung besonders zweckmäßig bei einem Drucksensor ist, können auch andere Sensoren eine solche geometrische Ausgestaltung aufweisen, wobei dann der Messaufnehmer gegebenenfalls kein Kraftaufnehmer ist.

Mit dieser Anordnung lassen sich in einer Ausführungsform als Drucksensor die auf das Innenrohr einwirkenden Kräfte, hervorgerufen durch eine Druckbeaufschlagung des geführten Fluids, in drei

Raumrichtungen des Rohrs erfassen und aus diesen drei Messungen kann in hinreichender Weise auf den Innendruck des Fluids in dem Rohr zurückgeschlossen werden.

Es versteht sich, dass in einer Ausführungsform der Erfindung die drei Aufnehmer um jeweils 120° in Umfangsrichtung des Rohrs voneinander beabstandet sind.

In einer weiteren Ausführungsform der Erfindung, bei welcher der Sensor ein Drucksensor ist, weist dieser zusätzlich ein Thermometer als einen weiteren Messaufnehmer auf, wobei das Thermometer zumindest in einer Nut oder in zumindest einer zumindest in die Außenfläche des Innenrohrs oder in die Innenfläche des Außenrohrs eingebrachten Ausnehmung angeordnet ist. Ein solches Thermometer ermöglicht eine Temperaturkompensation der Druckmessung. Dabei ist es zweckmäßig, wenn das Thermometer mit der Außenfläche des Innenrohrs in Eingriff ist, um die Temperatur des Innenrohrs und damit die Temperatur des Fluids zu erfassen.

Zumindest eine der oben genannten Aufgaben wird auch durch ein Verfahren zum Herstellen eines Sensors für eine Hochdruckleitung gelöst, welches die Schritte aufweist: Bereitstellen eines Außenrohrs aus Metall mit einer Außenfläche, einer Innenfläche, einem Außendurchmesser und einem Innendurchmesser, Bereitstellen eines Innenrohrs aus Metall mit einer Außenfläche, einer Innenfläche, einem Außendurchmesser und einem Innendurchmesser, wobei der Außendurchmesser des Innenrohrs kleiner ist als der Innendurchmesser des Außenrohrs und wobei eine Gesamtwandstärke gemessen als eine Hälfte einer Differenz zwischen dem Außendurchmesser des Außenrohrs und dem Innendurchmesser des Innenrohrs gleich oder größer als der Innendurchmesser des Innenrohrs ist, Einbringen zumindest einer sich in einer Längsrichtung des Rohrs erstreckenden Nut zumindest in die Innenfläche des Außenrohrs oder in die Außenfläche des Innenrohrs, Anordnen mindestens einer Signalleitung in der Nut, Anordnen mindestens eines mit der Signalleitung verbundenen Aufnehmers zumindest in der Nut oder in zumindest einer zumindest in die Außenfläche des Innenrohrs oder in die Innenfläche des Außenrohrs eingebrachten Ausnehmung, Einführen des Innenrohrs in das Außenrohr, sodass sich das Innenrohr in dem Außenrohr erstreckt, und Ziehen des Innenrohrs und das Außenrohrs gemeinsam durch eine erste Ziehmatrize mit einer die Außenfläche des Außenrohrs formenden Werkzeuginnenfläche, wobei ein Werkzeugdurchmesser der Werkzeuginnenfläche der ersten Ziehmatrize derart gewählt wird, dass durch das Ziehen der Innendurchmesser des Außenrohrs derart verringert wird, dass nach dem Ziehen das Außenrohr kraftschlüssig auf dem Innenrohr sitzt, sodass das Innenrohr und das Außenrohr gemeinsam ein Rohr bilden, wobei der Sensor ein Drucksensor ist und wobei der zumindest eine Aufnehmer ein Kraftaufnehmer ist, der derart mit dem Innenrohr in Eingriff ist, dass er in einem Betrieb des Sensors eine auf das Innenohr ausgeübte Kraft erfasst.

Ein derartiges Verfahren, bei dem das Verbinden des Außenrohrs und des Innenrohrs zu dem fertigen Rohr des Sensors durch ein gemeinsames Ziehen durch eine Ziehmatrize erfolgt, gewährleistet den notwendigen Kraftschluss zwischen Innenrohr und Außenrohr über ihre gesamte Länge hinweg in axialer Richtung. Das erfindungsgemäße Herstellungsverfahren ermöglicht es zudem, vor dem Zusammenfügen des Innenrohrs und des Außenrohrs sowohl die Signalleitung als auch den Sensor in einer Nut und gegebenenfalls einer daran anschließende Ausnehmung anzuordnen.

Das erfindungsgemäße Verfahren zum Herstellen eines Sensors für eine Hochdruckleitung hat gegenüber den aus dem Stand der Technik bekannten Verfahren zum Herstellen von hochdruckfesten Rohren einige Vorteile:
(1) Bei dem gemeinsamen Ziehen des Innenrohres und des Außenrohres durch die Ziehmatrize wird eine kraftschlüssige Verbindung zwischen diesen beiden Rohren, welche eine Verschiebung von Innen- und Außenrohr in axialer Richtung verhindert, erzeugt, während in radialer Richtung ein Formschluss vorliegt. Eine dauerhaft stabile und intakte Verbindung zwischen Innenrohr und Außenrohr spielt insbesondere bei einem Einsatz eines derartigen sogenannten Doppelwandrohres in der Hochdrucktechnik eine bedeutende Rolle. Bleibt diese dauerhaft stabile und intakte Verbindung aus, beispielsweise durch einen vorhandenen Luftspalt oder ein Spiel zwischen Innenrohr und Außenrohr oder einem fehlenden Kraftschluss zwischen den beiden Rohren, so kann dies bei einer hohen Druckbehaftung des Doppelwandrohres dazu führen, dass das Innenrohr durch Fortpflanzen von Anrissen deutlich leichter zerbirst.
(2) Die Herstellung eines doppelwandigen Rohres, d.h. eines Rohres bestehend aus einem Außenrohr und einem Innenrohr, gemäß der vorliegenden Erfindung führt dazu, dass das hergestellte Rohr einerseits eine ausreichend große Wanddicke und andererseits zugleich auch eine sehr hohe Oberflächengüte der äußeren Mantelfläche sowie insbesondere der inneren Mantelfläche aufweist. Erst die Erfüllung dieser beiden Erfordernisse ermöglicht einen ausreichend hohen Schutz des herzustellenden Rohres vor dem Zerbersten, wenn das Rohr mit Drücken jenseits der 12.000 bar beaufschlagt wird. Die große Wanddicke, die sich in aus der Summe der Wanddicken des Außenrohres und des Innenrohres nach dem Ziehen durch die erste Ziehmatrize ergibt, erhöht die Druckbeständigkeit des Rohres, da Anrisse auf der inneren Mantelfläche eine größere Strecke durchlaufen müssen, bis sie sich zur äußeren Mantelfläche fortgepflanzt haben. Zudem sorgt die kraftschlüssige Verbindung zwischen Innenrohr und Außenrohr dafür, dass sich diese Risse nicht entlang der Kontaktfläche zwischen Innenrohr und Außenrohr ausdehnen und das Innenrohr schlimmstenfalls zum Zerbersten bringen. Zudem findet das gemeinsame Ziehen des Innenrohres und des Außenrohres in einer Ausführungsform im kalten Zustand des Ausgangsmaterials, d.h. des einlaufenden Rohres, statt. Dadurch wird die Festigkeit sowie die Maß- und Oberflächenqualität der herzustellenden Rohre gegenüber Verfahren, bei denen die zu bearbeitenden Rohre erhitzt werden, gesteigert. Temperaturgradienten infolge einer inhomogenen Erwärmung des Rohres, die zu einer Verzerrung im Metallgefüge des Rohres führen, und Materialdefekte bzw. Gitterfehler, die sich infolge der Temperaturerhöhung ausdehnen, treten bei einer Kaltumformung von Rohren nicht auf. Durch das Kaltumformen in einer Ziehbank können somit höchstpräzise Rohre hoher Oberflächengüte hergestellt werden, dies allerdings nur bis zu einer bestimmten maximalen Wandstärke. Übersteigt die Wandstärke des zu Ziehenden Rohrs diese maximale Wandstärke, so nimmt die Oberflächengüte drastisch ab. Dadurch, dass erfindungsgemäß das Innenrohr und das Außenrohr getrennt voneinander gefertigt werden, bevor sie gemeinsam durch die Ziehmatrize gezogen werden, ist es möglich, die innere Mantelfläche des Innenrohres mit hoher Oberflächengüte herzustellen und trotzdem für das Rohr die für eine Hochdruckfestigkeit erforderliche Wandstärke bereitzustellen. Demzufolge stellt sich das erfindungsgemäße Verfahren durch die Kombination der Erfordernisse einer großen Wandstärke des herzustellenden Rohres einerseits und einer hohen Oberflächengüte der inneren Mantelfläche des herzustellenden Rohres andererseits als besonders geeignet zur Herstellung eines Rohres mit deutlich verbesserter dynamischer Druckbeständigkeit von hohen Drücken dar.

Um den Kraftschluss bereitzustellen, müssen das Außenmaß und das Innenmaß des Außenrohrs vor dem Zug durch die erste Ziehmatrize, das Außenmaß und das Innenmaß des Innenrohrs vor dem Zug durch die erste Ziehmatrize sowie das Werkzeugmaß der Werkzeuginnenfläche der ersten Ziehmatrize aufeinander abgestimmt werden.

Dabei kann der gemeinsame Zug des Außenrohrs und des Innenrohrs durch die dritte Ziehmatrize als ein Ziehen des Außenrohrs durch die dritte Ziehmatrize und über einen bzw. auf einen Ziehkern, welcher von dem Innenrohr gebildet wird, beschrieben werden.

Es hat sich gezeigt, dass mit diesem Verfahren ein Rohr mit Außenrohr und Innenrohr aus Metall hergestellt werden kann, in welches eine Signalleitung ein Aufnehmer integrierbar sind.

In einer Ausführungsform der Erfindung werden das Außenrohr und/oder das Innenrohr aus Stahl oder Edelstahl hergestellt. Es versteht sich, dass dann die Luppen, welche zum Bereitstellen oder Fertigen des Außenrohrs oder des Innenrohrs verwendet werden, ebenfalls aus Stahl bzw. Edelstahl bestehen. Es versteht sich, dass grundsätzlich das Material des Außenrohrs und/oder des Innenrohrs frei gewählt werden können, beispielsweise aus einer Gruppe bestehend aus Kohlenstoffstahl, Manganstahl, Zirkon und Kupfer.

Während in einer Ausführungsform der Erfindung das Außenrohr und das Innenrohr aus dem gleichen Material bestehen, weisen das Außenrohr und das Innenrohr in einer alternativen Ausführungsform voneinander verschiedene Materialien auf. Letzteres hat den Vorteil, dass gezielt unterschiedliche Eigenschaften der Materialien für das Außenrohr und das Innenrohr bereitgestellt werden können, die sich beliebig miteinander kombinieren lassen, um ein an eine bestimmte Anwendung angepasstes Rohr zu erhalten.

In einer Ausführungsform der Erfindung werden die Schritte des Einführens des Innenrohrs in das Außenrohr und das Ziehen des Innenrohrs und des Außenrohrs gemeinsam durch eine erste Ziehmatrize genau in der angegebenen Reihenfolge, d.h. nacheinander, ausgeführt. Hingegen gibt es für das Bereitstellen des Außenrohrs und das Bereitstellen des Innenrohrs keine erfindungswesentliche Reihenfolge.

Bei dem Bereitstellen des Außenrohrs oder des Innenrohrs beispielsweise durch Umformen einer Luppe zu dem Außenrohr bzw. Innenrohr kann in einer Ausführungsform gleichzeitig ein Festlegen der Querschnittsfläche des jeweiligen Rohrs erfolgen.

Entscheidend für das erfindungsgemäße Herstellungsverfahren ist, dass das bereitgestellte Außenrohr einen auf den Außendurchmesser des bereitgestellten Innenrohrs angepassten Innendurchmesser aufweist, sodass sich das Innenrohr mit vergleichsweise geringen Kräften in das Außenrohr einführen lässt, um das Rohr aus dem Außenrohr und dem Innenrohr zusammenzufügen.

Bei dem Ziehen durch die erste Ziehmatrize gilt es zunächst, den erforderlichen Kraftschluss bereitzustellen. Ein solcher Kraftschluss erfordert es in einer Ausführungsform der Erfindung, dass der Außendurchmesser des Innenrohrs durch den Ziehschritt verringert wird, d.h. das Innenrohr zusammengedrückt wird. Dazu wird in einer Ausführungsform der Erfindung bei dem Ziehen des Innenrohrs und des Außenrohrs gemeinsam durch die erste Ziehmatrize eine Wandstärke des Außenrohrs und der Innendurchmesser des Außenrohrs derart reduziert, dass der Außendurchmesser des Innenrohrs gleichzeitig um mindestens 0,01 mm verringert wird. Dabei ergibt eine Verringerung des Außendurchmessers des Innenrohrs um 0,15 mm einen guten Kraftschluss zwischen Innenrohr und Außenrohr.

Bei dem gemeinsamen Ziehen von Innenrohr und Außenrohr ist es in einer Ausführungsform jedoch geraten, das Innenrohr durch den Ziehprozess nicht zu stark zu verformen. In einer Ausführungsform wird bei dem Ziehen des Innenrohrs und des Außenrohrs gemeinsam durch die erste Ziehmatrize eine Wandstärke des Außenrohrs und der Innendurchmesser des Außenrohrs derart reduziert, dass gleichzeitig der Außendurchmesser des Innenrohrs um höchstens 0,3 mm reduziert wird. Dies zum einen, um zu verhindern, dass die durch die Nut und gegebenenfalls die Ausnehmung geschaffenen Bauräume für Signalleitung und Aufnehmer so stark verkleinert werden, dass die Signalleitung und/oder der Aufnehmer durch das Ziehen beschädigt werden. Zum anderen gilt es jedoch zu verhindern, dass die Umformung durch die erste Ziehmatrize die Oberflächeneigenschaften der Innenfläche des Innenrohrs negativ beeinflussen.

Daher werden in einer Ausführungsform der Erfindung Werkzeugdurchmesser einer Werkzeuginnenfläche der ersten Ziehmatrize, der Außendurchmesser und der Innendurchmesser des Außenrohrs vor dem Ziehen sowie der Außendurchmesser und der Innendurchmesser des Innenrohrs vor dem Ziehen derart gewählt, dass durch das Ziehen des Innenrohrs und des Außenrohrs gemeinsam durch die erste Ziehmatrize der Innendurchmesser des Innenrohrs nicht reduziert wird.

In einer Ausführungsform der Erfindung umfasst das Bereitstellen des Innenrohrs und das Einbringen der Nut in die Außenfläche des Innenrohrs die Schritte: Bereitstellen einer Luppe aus Metall, Ziehen der Luppe durch eine zweite Ziehmatrize mit einer die Außenfläche des Innenrohrs formenden Werkzeuginnenfläche zu dem Innenrohr, wobei ein Werkzeugdurchmesser der Werkzeuginnenfläche der zweiten Ziehmatrize derart gewählt wird, dass der Außendurchmesser des Innenrohrs kleiner ist als der Innendurchmesser des Außenrohrs, und wobei die Werkzeuginnenfläche der zweiten Ziehmatrize mindestens einen derart nach innen vorspringenden Abschnitt aufweist, dass in die Außenfläche des Innenrohrs die mindestens eine sich in Längsrichtung des Innenrohrs erstreckende Nut gezogen wird.

Wesentlich, um ein Rohr mit einer integrierten Sensorik und/oder einer integrierten Signalleitung bereitstellen zu können, ist, dass sich zwischen dem Außenrohr und dem Innenrohr zumindest eine Signalleitung und zumindest ein Aufnehmer unterbringen lassen. Dazu wird in einer Ausführungsform der Erfindung entweder in die Innenwand des Außenrohrs oder in die Außenwand des Innenrohrs oder sogar in beide beim Umformen einer Luppe zu dem Außenrohr bzw. zu dem Innenrohr durch Ziehen eine Nut eingebracht. Es versteht sich, dass sich diese Nut in Längsrichtung des Rohrs erstreckt und somit zumindest den Raum für eine Signalleitung bereitstellt.

Soll eine Nut für die Signalleitung in der Außenwand des Innenrohrs bereitgestellt werden, so muss die Werkzeuginnenfläche mit Hilfe einer zweiten Ziehmatrize, welche die Außenfläche des Innenrohrs definiert, mindestens einen derart nach innen vorspringenden Abschnitt aufweisen, dass in die Außenfläche des Innenrohrs eine sich in Längsrichtung des Innenrohrs erstreckende Nut gezogen wird.

Wird die Nut alternativ oder zusätzlich in die Innenwand des Außenrohrs gezogen, so erfolgt der Zug des Außenrohrs mit Hilfe einer dritten Ziehmatrize, deren Werkzeuginnenfläche die Außenfläche des Außenrohrs formt, und eines Ziehkerns, dessen Werkzeugaußenfläche die Innenfläche des Außenrohrs formt. In einer solchen Ausführungsform weist die Werkzeugaußenfläche des Ziehkerns mindestens einen derart nach außen vorspringenden Abschnitt auf, dass während des Ziehens dieser Abschnitt die Nut in die Innenfläche des Außenrohrs zieht. Dem gegenüber kann in einer solchen Ausführungsform das Ziehen einer Luppe aus Metall durch eine Ziehmatrize, welche im Sinne der vorliegenden Anmeldung als zweite Ziehmatrize bezeichnet wird, zu dem Innenrohr in einer Ausführungsform der Erfindung ohne einen Ziehkern erfolgen.

Während in einer Ausführungsform der Erfindung genau eine Nut in der Innenfläche des Außenrohrs und/oder der Außenwand des Innenrohrs vorgesehen ist, können auch eine Mehrzahl von Nuten in das Außenrohr oder das Innenrohr gezogen werden. Es versteht sich, dass in einer solchen Ausführungsform die Werkzeugaußenfläche des Ziehkerns bei einer Anordnung der Nuten in der Innenfläche des Außenrohrs eine entsprechende Anzahl von nach außen vorspringenden Abschnitten aufweist. In einer Ausführungsform werden in die Innenfläche des Außenrohrs genau drei Nuten gezogen. Diese haben in einer Ausführungsform einen Abstand in Umfangsrichtung von jeweils 120° voneinander. Ebenso weist bei einer Mehrzahl von in der Außenfläche des Innenrohrs vorgesehenen Nuten die Werkzeuginnenfläche der zweiten Ziehmatrize eine Mehrzahl von nach innen vorspringenden Abschnitten auf. In einer Ausführungsform werden in die Außenfläche des Innenrohrs genau drei Nuten gezogen. Diese haben in einer Ausführungsform einen Abstand in Umfangsrichtung von jeweils 120° voneinander.

Während die nach außen bzw. nach innen vorspringenden Abschnitte in der Werkzeugaußenfläche des Ziehkerns oder der Werkzeuginnenfläche der Ziehmatrize jedes beliebige Profil aufweisen können, ist in einer Ausführungsform der Erfindung das Querschnittsprofil des jeweiligen vorspringenden Abschnittes teilkreisförmig. Eine solche teilkreisförmige Nut weist den Vorteil auf, dass sich das entsprechende Werkzeug gut herstellen lässt und eine hohe Standzeit aufweist.

In einer Ausführungsform der Erfindung weist die Nut in einer Umfangsrichtung des Außenrohrs oder des Innenrohrs eine Breite und in radialer Richtung des Außenrohrs oder des Innenrohrs eine Tiefe auf, wobei die Breite geringer ist als die Tiefe. Das entsprechende, das Negativ bildende Werkzeug hat eine hohe Stabilität. Dabei wird als Breite in Umfangsrichtung die Erstreckung der Nut in der Außenfläche bzw. der Innenfläche entlang der Kontur der Außenfläche bzw. der Innenfläche verstanden. Es versteht sich, dass bei einem Rohr mit kreisförmigem Querschnitt die Breite entlang des Umfangs der Fläche, in welche die Nut eingelassen ist, gemessen wird. Entsprechend wird die Tiefe der Nut in einer radialen Richtung gemessen. Beim Rohr mit kreisförmigem Querschnitt verläuft diese radiale Richtung in Richtung des Radius des Rohrs.

Um das fertige Rohr durch die Nuten in einem seiner Bestandteile nicht unnötig zu schwächen, wird in einer Ausführungsform der Erfindung vor dem Schritt des Einführens des Innenrohrs in das Außenrohr zumindest das Außenrohr spanend bearbeitet, sodass mindestens eine Ausnehmung in der Innenfläche des Außenrohrs gebildet wird, wobei sich die Ausnehmung an mindestens eine Nut anschließt oder das Innenrohr wird spanend bearbeitet, sodass mindestens eine Ausnehmung in der Außenfläche des Innenrohrs gebildet wird, wobei sich die Ausnehmung an mindestens eine Nut anschließt. Auf diese Weise wird in Längsrichtung des Rohrs betrachtet punktuell, d.h. an einer oder mehreren Positionen in Längsrichtung des Rohrs, ein Aufnahmeraum zum Aufnehmen insbesondere eines Aufnehmers geschaffen. So lässt sich die Breite der Nut geringer ausführen.

In einer Ausführungsform der Erfindung erfolgt die spanende Bearbeitung durch ein Verfahren ausgewählt aus Fräsen, Bohren und Feilen oder einer Kombination davon.

Während die Nut über die gesamte Länge des Rohrs mit Hilfe des Ziehens eingebracht werden kann, werden Ausnehmungen in Längsrichtung des Rohrs in einer Ausführungsform der Erfindung nur an Positionen vorgesehen, an denen auch Sensoren angeordnet werden müssen. Auf diese Weise kann die Bearbeitungszeit durch die spanende Bearbeitung reduziert werden.

Dabei schließt in einer Ausführungsform eine Ausnehmung an eine Nut an. Ein Anschließen der Ausnehmung an die Nut bedeutet im Sinne der vorliegenden Anmeldung, dass die Nut und die Ausnehmung in der Außenfläche bzw. der Innenfläche einen zusammenhängenden Bauraum bzw. ein zusammenhängendes Volumen innerhalb des Außen- bzw. Innenradius bilden.

Vor dem Schritt des Einführens des Innenrohrs in das Außenrohr werden mindestens eine Signalleitung und/oder ein Sensor in die Nut eingebracht. In eine einzelne Nut kann auch eine Mehrzahl von Signalleitungen eingebracht werden und dann, wenn eine Mehrzahl von Nuten in dem Außenrohr und/oder dem Innenrohr vorgesehen sind, können in jede der Nuten eine oder eine Mehrzahl von Signalleitungen eingebracht werden.

Unter einer Signalleitung im Sinne der vorliegenden Anmeldung wird jede Leitung verstanden, die in der Lage ist, ein Signal, d.h. Information, von einem Sender zu einem Empfänger zu übertragen. Dabei ist in einer Ausführungsform die Signalleitung ausgewählt aus einer Leitung für ein elektrisches Signal, einer Leitung für ein elektromagnetisches Signal und einer Leitung für ein optisches Signal oder irgendeiner Kombination davon. Beispiele für eine solche Signalleitung sind ein isolierter elektrisch leitender Draht oder eine optische Glasfaser.

In einer Ausführungsform der Erfindung werden die Signalleitung in die Nut und/oder der Aufnehmer in die Nut und/oder die Ausnehmung mit Hilfe eines Klebstoffs eingeklebt. Eine solche Klebverbindung fixiert den Aufnehmer und die Signalleitung in der Nut bzw. Ausnehmung während des Einbringens des Innenrohrs in das Außenrohr und während des Zugs durch die erste Ziehmatrize.

Soweit zuvor Aspekte der Erfindung im Hinblick auf das Verfahren zum Herstellen eines Sensors für eine Hochdruckleitung beschrieben wurden, so gelten diese auch für einen mit diesem Verfahren hergestellten Sensor für eine Hochdruckleitung. Soweit der beschriebene Sensor für eine Hochdruckleitung Merkmale aufweist, so können diese durch eine Anpassung des Verfahrens zum Herstellen des Sensors bereitgestellt werden.

Weitere Vorteile, Merkmale und Anwendungsmöglichkeiten der vorliegenden Erfindung werden anhand der folgenden Beschreibung einer Ausführungsform und der dazugehörigen Figuren deutlich.
Figur 1 zeigt eine weggebrochene, perspektivische Ansicht eines Innenrohrs als Teil einer Ausführungsform des erfindungsgemäßen Sensors.
Figur 2 zeigt eine weggebrochene, perspektivische Ansicht des Innenrohrs aus Figur 1 mit daran aufgenommenen Signalleitungen und Aufnehmern.
Figur 3 zeigt eine weggebrochene, perspektivische Ansicht des Innenrohrs aus Figuren 1 und 2 mit einem dazu konzentrischen Außenrohr.
Figur 4 zeigt eine Draufsicht auf die Stirnseite des Innenrohrs aus den Figuren 1 bis 3.
Figur 5 zeigt eine Schnittansicht des Innenrohrs aus Figuren 1 bis 3 in einer Ebene, in der Aufnehmer angeordnet sind.
Figur 6 zeigt eine Schnittansicht durch den Sensor mit Innenrohr und Außenrohr aus Figur 3 in einer Ebene, in der ein Aufnehmer angeordnet ist.
Figur 7 zeigt eine Schnittansicht in Längsrichtung einer Ausführungsform einer Ziehmatrize zum zum Herstellen des Innenrohrs aus den Figuren 1 bis 6.
Figur 8 zeigt eine Schnittansicht in Querrichtung durch die Ziehmatrize aus Figur 7.
Figur 9 zeigt eine Querschnittsansicht eines Rohrs als Teil einer alternativen Ausführungsform des erfindungsgemäßen Sensors.
Figur 10 zeigt eine Querschnittsansicht eines Rohrs als Teil einer weiteren Ausführungsform des erfindungsgemäßen Sensors.

In den Figuren sind gleiche Elemente mit gleichen Bezugszeichen bezeichnet.

Bei den Figuren handelt es sich um schematische Ansichten, die nicht maßstabsgerecht sind. Insbesondere zeigen alle Figuren einen Sensor für eine Hochdruckleitung oder Teile eines solchen Sensors. Um die erforderliche Hochdruckfestigkeit bereitzustellen, ist eine Gesamtwandstärke des Rohrs aus Außenrohr und Innenrohr als Teil des Sensors gleich oder größer als der Innendurchmesser des Innenohrs. Dabei wird die Gesamtwandstärke des fertigen Rohrs aus Außenrohr und Innenrohr gemessen als eine Hälfte der Differenz zwischen dem Außendurchmesser des Außenrohrs und dem Innendurchmesser der Innenrohrs.

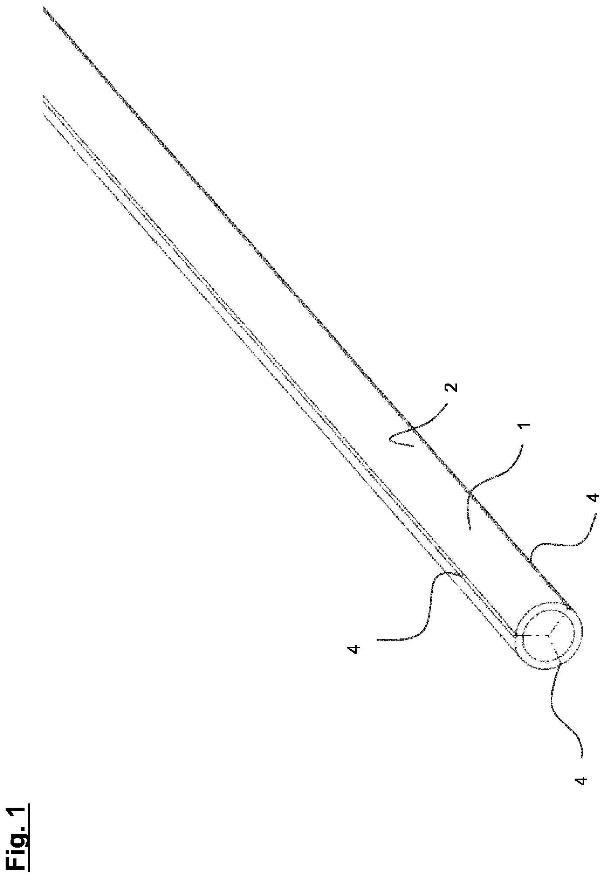

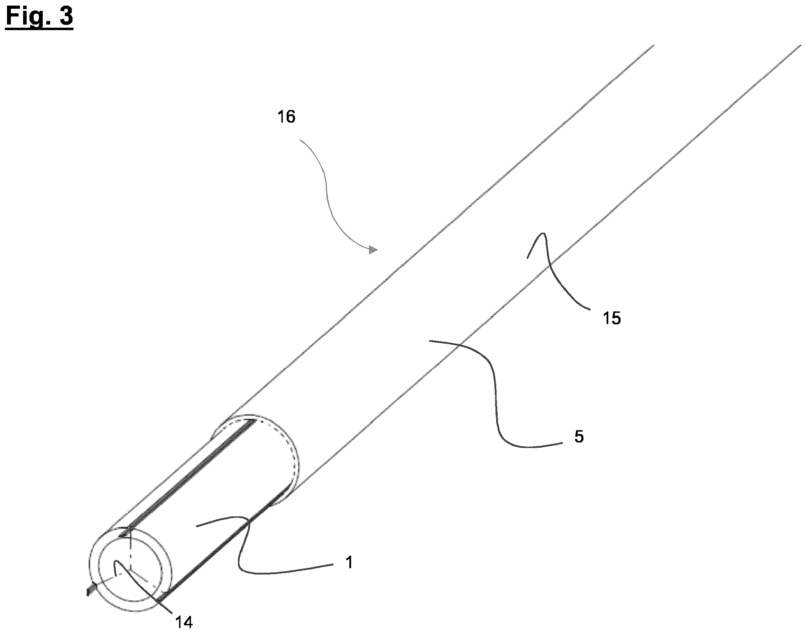

Figur 1 zeigt ein Innenrohr 1, welches in seiner Außenfläche 2 drei Nuten 4 aufweist. Diese Nuten 4 dienen dazu, bei einem das Innenrohr 1 und ein Außenrohr, dieses ist in Figur 3 mit dem Bezugszeichen 5 bezeichnet, umfassenden Sensor eine Signalleitung 7 aufzunehmen.

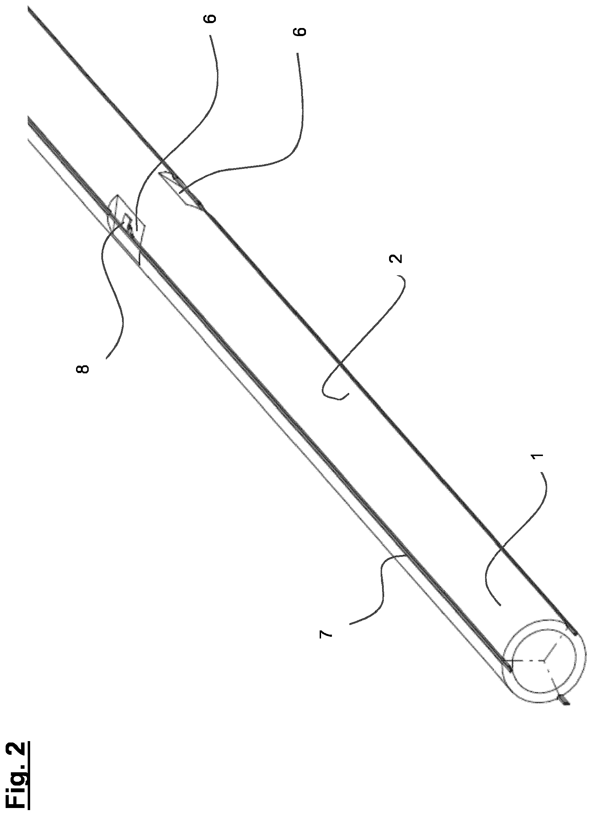

Bei dem Innenrohr 1 handelt es sich in der dargestellten Ausführungsform um ein kaltumgeformtes, hier kaltgezogenes, Edelstahlrohr. Während die Nuten 4 durch Ziehen in die Außenfläche 2 des Rohrs 1 eingebracht werden, werden die zusätzlichen Ausnehmungen 6 in die Außenfläche 2 des Rohrs eingefräst. Diese sind in Figur 2 zu sehen.

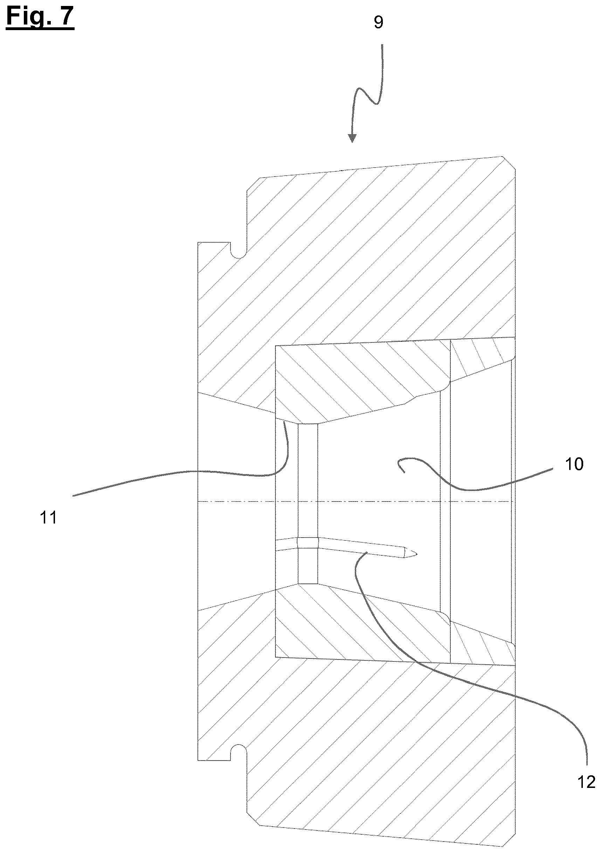

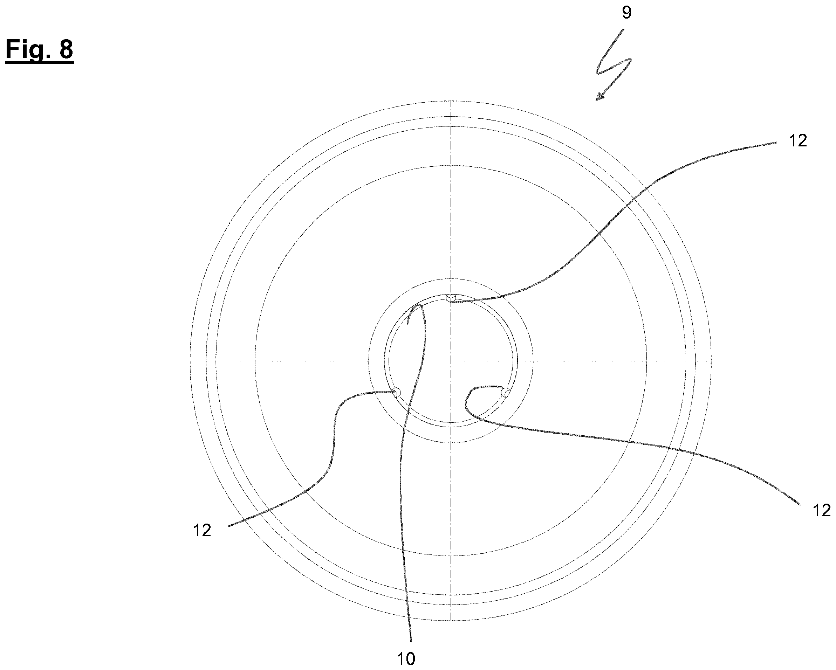

Die Figuren 7 und 8 zeigen eine Ziehmatrize 9 zum Ziehen des Innenrohrs 1. Die Ziehmatrize 9 verringert den Außendurchmesser einer einlaufenden Luppe, sodass das fertiggezogene Innenrohr 1 einen Außendurchmesser aufweist, welcher durch das Werkzeugmaß der Ziehmatrize 9 definiert ist. Dabei wird als Werkzeugmaß im Sinne der vorliegenden Anmeldung der kleinste Durchmesser der konischen Werkzeuginnenfläche 10 bezeichnet. Dieser kleinste Innendurchmesser wird bei der Ziehmatrize 9 aus Figur 7 an der mit 11 bezeichneten Stelle erreicht. Zusätzlich zu der Ziehmatrize 9 kann zum Ziehen der Luppe zu dem fertigen Innenrohr 1 ein gehalterter oder ein fliegender Ziehkern verwendet werden, welcher das Innenmaß, d.h. den Innendurchmesser des Innenrohrs 1, formt. Dies ist aber nicht zwingend notwendig.

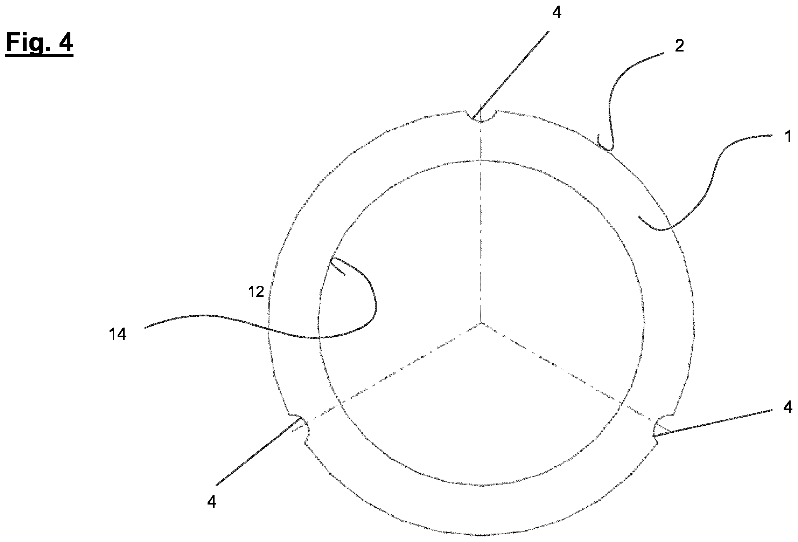

Figur 4 zeigt einen Querschnitt durch das Innenrohr 1 in jeder beliebigen Ebene außerhalb der Ausnehmungen 6. Die Innenfläche des Innenrohrs 1 hat das Bezugszeichen 14.

Zum Ziehen der Nuten 4 in die Außenfläche 2 des Innenrohrs 1 sind auf der Werkzeuginnenfläche 10 drei vorspringende Abschnitte 12 vorgesehen. Diese nach innen von der Werkzeuginnenfläche vorspringenden Abschnitte 12 sind in Umfangsrichtung um jeweils 120° voneinander beabstandet. Jeder der nach innen vorspringenden Abschnitte weist einen teilkreisförmigen Querschnitt auf, wobei bezogen auf die Werkzeuginnenfläche 10 der Teilkreis eines jeden nach innen vorspringenden Abschnitts kleiner als 180° ist. Auf diese Weise haben die durch die Ziehmatrize 9 in die Außenfläche 2 des Innenrohrs 1 gezogenen Nuten 4 eine geringere Breite in Umfangsrichtung des Rohrs 1 als sie in radialer Richtung des Rohrs 1 tief sind.

Nach dem Ziehen durch die Ziehmatrize 9 weist das Innenrohr 1 damit nicht nur sein Außenmaß und sein Innenmaß auf, sondern es zeigt auch drei jeweils um 120° voneinander beabstandete Nuten 4.

Die Ziehmatrize 9 aus den Figuren 7 und 8 wird im Sinne der vorliegenden Anmeldung als zweite Ziehmatrize bezeichnet.

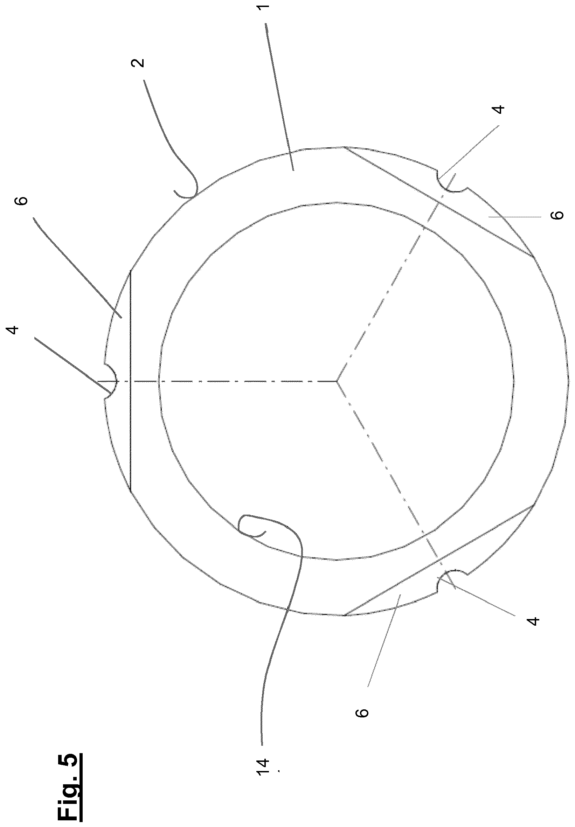

Nach dem Ziehen des Innenrohrs 1 werden in dessen Außenfläche 2 zusätzlich die Ausnehmungen 6 eingefräst, sodass sich diese an die Nuten 4 anschließen. Figur 5 zeigt eine Schnittansicht des Rohrs im Bereich der Ausnehmung 6.

In der Außenfläche 2 des Innenrohrs 1 sind drei Ausnehmungen 6 vorgesehen, die dazu dienen, jeweils einen Aufnehmer, der mit einer Signalleitung 7 verbunden ist, aufzunehmen. Von den Ausnehmungen 6 sind in der perspektivischen Ansicht aus Figur 2 nur zwei zu sehen, die anderen werden von dem Rohr verdeckt.

Jede der Ausnehmungen 6 schließt an jeweils eine Nut 4 in dem Sinne an, dass die Nut 4 und die Ausnehmung 6 einen zusammenhängenden Aufnahmeraum für die Signalleitungen 7 und den Aufnehmer 8 bilden.

Als nächstes werden dann die Signalleitungen 7 zusammen mit den Aufnehmern 8 in die Nuten 4 bzw. die Ausnehmungen 6 eingeklebt. Bei dieser Klebung kommt es nur darauf an, dass die Klebung ausreichend stabil ist, um ein Einführen des Innenrohrs 1 in das Außenrohr 5 zu ermöglichen. In der dargestellten Ausführungsform sind die Nuten 4 gerade so bemessen, dass sie jeweils zwei Signalleitungen 7 aufnehmen.

Um den vollständigen Sensor herstellen zu können, ist es zunächst unerheblich, wie das Außenrohr 5 hergestellt oder bereitgestellt wird. Typischerweise wird es sich auch bei dem Außenrohr 5 um ein kaltumgeformtes Rohr aus Edelstahl handeln.

Entscheidend ist jedoch, dass der Außendurchmesser des Innenrohrs 1 kleiner ist als der Innendurchmesser des Außenrohrs 5. Auf diese Weise lässt sich das Innenrohr 1 bei geringer Reibung an dem Außenrohr 5 mit geringer Kraft in das Außenrohr 5 einführen. Dieser Arbeitsschritt wird in einer Ausführungsform manuell ausgeführt. Weisen das Innenrohr 1 und das Außenrohr 5 eine zu hohe Reibung beim Einführen des Innenrohrs 1 in das Außenrohr 5 auf, so kann es zu einer Beschädigung der bereits in den Nuten 4 und Ausnehmungen 6 angeordneten Signalleitungen 7 und Aufnehmer 8 kommen.

Die beiden konzentrisch zueinander angeordneten Innen- und Außenrohre 1, 5 werden dann mechanisch kraftschlüssig zu einem Rohr miteinander verbunden, indem beide Rohre gemeinsam auf einer Ziehbank durch eine Ziehmatrize gezogen werden. Innen- und Außenrohr 1, 5 zusammen mit den Signalleitungen 7 und den Aufnehmern 8 bilden dann den erfindungsgemäßen Sensor 16 für eine Hochdruckleitung. Die Ziehmatrize wird im Sinne der vorliegenden Anmeldung als erste Ziehmatrize bezeichnet. Die erste Ziehmatrize weist eine Ausgestaltung auf, die derjenigen der Ziehmatrize aus Figuren 7 und 8 ähnelt, wobei die erste Ziehmatrize keine vorspringenden Abschnitte auf der formenden Werkzeuginnenfläche aufweist.

Entscheidend für diesen Verfahrensschritt zur Herstellung des Rohrs ist, dass der Innendurchmesser des Außenrohrs 5 derart reduziert wird, dass die Innenfläche des Außenrohrs 5 kraftschlüssig auf der Außenfläche 2 des Innenrohrs 1 aufsitzt. Um den Kraftschluss bereitzustellen, ist es erforderlich, dass durch das Ziehen des Innenrohrs und des Außenrohrs gemeinsam durch die erste Ziehmatrize eine Wandstärke des Außenrohrs und der Innendurchmesser des Außenrohrs derart reduziert werden, dass auch der Außendurchmesser des Innenrohrs um mindestens 0,01 mm und um höchstens 0,3 mm verringert wird. Die obere Grenze einer Reduzierung des Außendurchmessers des Innenrohrs dient dazu zu verhindern, dass bei dem gemeinsamen Ziehen von Innenrohr und Außenrohr gemeinsam durch die erste Ziehmatrize der Bauraum der Nuten 4 und Ausnehmungen 6 verringert wird und die Signalleitungen bzw. die Aufnehmer beschädigt werden. Zudem muss eine Veränderung des Innendurchmessers der Innenrohrs vermieden werden, um die Oberflächeneigenschaften der Innenfläche des Innenrohrs nicht zu verändern und die Druckfestigkeit des Rohrs nicht zu verändern.

In der dargestellten Ausführungsform weist der Teilkreis, welcher die Nut 4 bildet, einen Radius von 0,5 mm auf. Der Teilkreis ist derart in die Außenfläche 2 des Innenrohrs 1 eingelassen, dass die Breite der Nut gemessen als Verbindungsstrecke zwischen den beiden Rändern in einer Richtung senkrecht zur Längsachse des Innenrohrs 1 1,88 mm beträgt. Die Tiefe der Nut 4 beträgt in dieser Ausführungsform dann 0,7 mm gemessen zwischen dem tiefsten Punkt der Nut und der Verbindungslinie zwischen den beiden Rändern der Nut auf der Außenfläche 2 und senkrecht zu dieser Verbindungsstrecke.

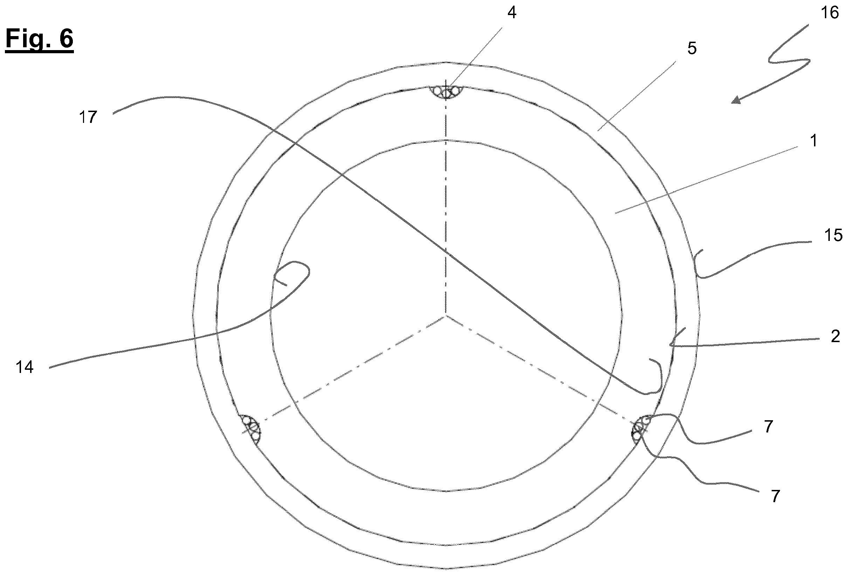

Figur 6 zeigt eine Querschnittsansicht des fertigen Rohrs 14 aus Figur 3 nach dem gemeinsamen Ziehen von Innenrohr 1 und Außenrohr 5 durch die dritte Ziehmatrize. Dabei ist zu erkennen, dass in den Nuten 4 jeweils drei Signalleitungen 7 angeordnet sind. Deutlich ist auch zu erkennen, dass die Außenfläche 2 des Innenrohrs 1 an der Innenfläche 14 des Außenrohrs 5 anliegt.

Die Außenfläche des Außenrohrs 5 ist in den Figuren mit dem Bezugszeichen 15 bezeichnet.

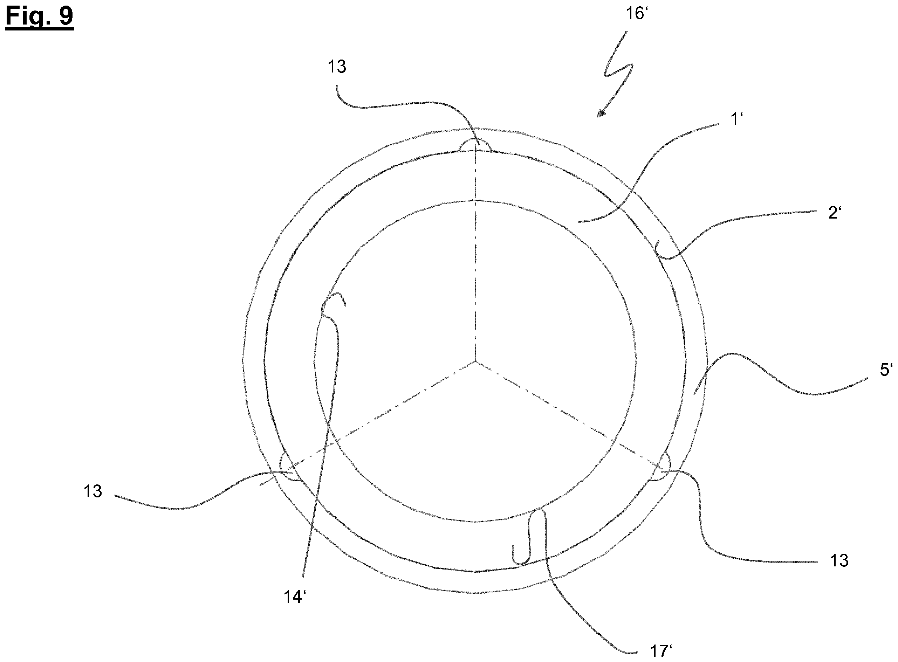

Figur 9 zeigt eine Ausführungsform eines erfindungsgemäßen Sensors 16', bei dem das Innenrohr 1' eine Außenfläche 2' ohne Nuten und Ausnehmungen aufweist. Stattdessen sind in das auf das Innenrohr 1' aufgezogene Außenrohr 5' drei Nuten 13 hineingezogen. Zu diesem Zweck ist das Außenrohr aus einer Luppe gezogen worden, wobei als Werkzeug eine Ziehmatrize und ein gehalterter Ziehkern verwendet wurden. Diese Ziehmatrize bildet die dritte Ziehmatrize im Sinne der vorliegenden Anmeldung.

Der Ziehkern weist dazu auf seiner die Innenfläche des Außenrohrs definierenden Werkzeugaußenfläche drei nach außen vorspringende Abschnitte auf, welche die Nuten 13 in die Innenfläche des Außenrohrs ziehen. Zusätzlich ist es möglich, auch in der Innenfläche 17' des Außenrohrs 5' Ausnehmungen vorzusehen, in welchen Sensoren aufgenommen werden. Diese Ausnehmungen können durch Fräsen in die Innenfläche 17` eingebracht werden.

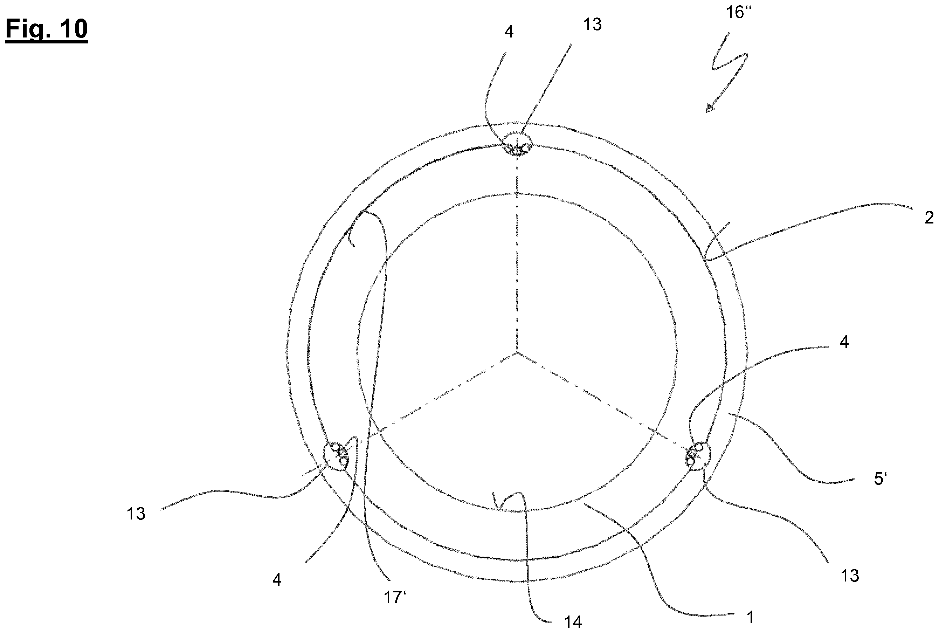

Figur 10 zeigt einen schematischen Querschnitt durch einen Sensor 16". Bei dieser Ausführungsform des Sensors 16" weist sowohl die Innenfläche 17' des Außenrohrs 5' als auch die Außenfläche 2 des Innenrohrs 1 jeweils vier Nuten 4, 13 auf. Dabei wurden die Nuten 4 des Innenrohrs 1 und die Nuten 13 des Außenrohrs 5' so hergestellt, wie dies für das Innenrohr 1 aus den Figuren 1 bis 5 und für das Außenrohr 5' aus Figur 9 beschrieben wurde. Die Nuten 4, 13 werden so angeordnet, dass sie jeweils einen gemeinsamen Bauraum definieren.

Im Sinne der vorliegenden Anmeldung bilden in allen dargestellten Ausführungsformen das Innenrohr und das Außenrohr mit den Signalleitungen 7 und den Aufnehmern zusammen den Sensor 16, 16', 16" für eine Hochdruckleitung. In den dargestellten Ausführungsformen handelt es sich bei den Aufnehmern um Kraftaufnehmer 8 in Form von Dehnungsmessstreifen, welche eine auf das Innenrohr 1, 1' einwirkende Kraft erfassen. Dazu sind die Kraftaufnehmer 8 in Eingriff mit der Außenfläche des Innenrohrs. Kräfte werden auf das Innenrohr insbesondere durch den Druck eines in dem Rohr geführten Fluids ausgeübt, so dass der Sensor 16, 16', 16" ein Drucksensor für eine Hochdruckleitung ist.

### Bezugszeichenliste

- 1, 1': Innenrohr
- 2, 2': Außenfläche des Innenrohrs
- 4: Nut in der Außenfläche des Innenrohrs
- 5, 5': Außenrohr
- 6: Ausnehmung
- 7: Signalleitung
- 8: Kraftaufnehmer
- 9: zweite Ziehmatrize
- 10: Werkzeuginnenfläche der Ziehmatrize
- 11: Werkzeugmaß
- 12: vorspringender Abschnitt der Werkzeuginnenfläche
- 13: Nut in der Innenfläche des Außenrohrs
- 14, 14`: Innenfläche des Innenrohrs
- 15: Außenfläche des Außenrohrs
- 16, 16', 16": Sensor
- 17, 17`: Innenfläche des Außenrohrs

## Patentansprüche

1. Sensor (16, 16', 16") für eine Hochdruckleitung mit
zumindest einem Aufnehmer (8), zumindest einer Signalleitung (7) und einem Rohr,
wobei der zumindest ein Aufnehmer (8) mit der zumindest einen Signalleitung (7) verbunden ist,
wobei der Sensor (16, 16', 16") ein Drucksensor ist, wobei der zumindest eine Aufnehmer (8) ein Kraftaufnehmer ist,
wobei der Sensor ein Außenrohr (5, 5') aus Metall mit einer Außenfläche (15), einer Innenfläche (17, 17'), einem Außendurchmesser und einem Innendurchmesser und
ein Innenrohr (1, 1') aus Metall mit einer Außenfläche (2, 2'), einer Innenfläche (14, 14'), einem Außendurchmesser und einem Innendurchmesser aufweist,
wobei sich das Innenrohr (1, 1') konzentrisch in dem Außenrohr erstreckt, so dass das Innenrohr (1, 1 ') und das Außenrohr (5, 5') gemeinsam das Rohr bilden, wobei eine Gesamtwandstärke gemessen als eine Hälfte einer Differenz zwischen dem Außendurchmesser des Außenrohrs (5, 5') und dem Innendurchmesser des Innenrohrs (1, 1 ') gleich oder größer als der Innendurchmesser des Innenohrs (1, 1') ist,
wobei sich in der Innenfläche (17, 17`) des Außenrohrs (5, 5') oder in der Außenfläche (2, 2`) des Innenrohrs (1, 1') in einer Längsrichtung des Rohrs zumindest eine Nut (4, 13) erstreckt,
wobei die zumindest eine Signalleitung (7) in der Nut (4, 13) angeordnet ist,
wobei der Aufnehmer (8) zumindest in der Nut (4, 13) oder in zumindest einer zusätzlich zu der mindestens einen Nut (4, 13) zumindest in die Außenfläche (2, 2`) des Innenrohrs (1, 1') oder in die Innenfläche (17, 17`) des Außenrohrs (5, 5') eingebrachten Ausnehmung (6) angeordnet ist,
wobei das Außenrohr (5, 5') kraftschlüssig auf dem Innenrohr (1, 1') sitzt.

2. Sensor (16, 16', 16") nach dem vorhergehenden Anspruch, **dadurch gekennzeichnet, dass** der Sensor
drei sich zumindest in der Innenfläche des Außenrohrs (5') oder in der Außenfläche des Innenrohrs (1, 1') in einer Längsrichtung des Rohrs erstreckende Nuten (4, 13) aufweist,
wobei in jeder der drei Nuten (4, 13) mindestens eine Signalleitung (7) angeordnet ist,
wobei jeweils ein mit mindestens einer Signalleitung (7) verbundener Aufnehmer (8) zumindest in einer der drei Nuten (4, 13) oder in drei sich an jeweils eine der Nuten (4, 13) anschließenden Ausnehmungen (6) angeordnet ist und
wobei die Aufnehmer (8) in Längsrichtung des Rohrs derart angeordnet sind, dass es eine Querschnittsebene senkrecht zu der Längsrichtung des Rohrs gibt, die alle drei Aufnehmer (8) schneidet.

3. Sensor (16, 16', 16") nach dem vorhergehenden Anspruch, **dadurch gekennzeichnet, dass** die drei Aufnehmer (8) um jeweils 120° in Umfangsrichtung des Rohrs voneinander beabstandet sind.

4. Sensor (16, 16', 16") nach Anspruch 2 oder 3, **dadurch gekennzeichnet, dass** die drei Aufnehmer (8) Kraftaufnehmer sind, so dass der Sensor (16, 16', 16") ein Drucksensor ist.

5. Sensor (16, 16', 16") nach dem vorhergehenden Anspruch, **dadurch gekennzeichnet, dass** der Sensor (16, 16', 16") zusätzlich ein Thermometer aufweist, wobei das Thermometer zumindest in einer Nut (4, 13) oder in zumindest einer zumindest in die Außenfläche des Innenrohrs (1) oder in die Innenfläche des Außenrohrs (5') eingebrachten Ausnehmung (6) angeordnet ist.

6. Sensor (16, 16`, 16") nach einem der vorhergehenden Ansprüche, **dadurch gekennzeichnet, dass** das Innenrohr (1, 1') ein kaltverfestigtes Rohr mit einer Zugfestigkeit von 900 N oder mehr ist.

7. Sensor (16, 16`, 16") nach einem der vorhergehenden Ansprüche, **dadurch gekennzeichnet, dass** das Innenrohr (1, 1') eine größere Dehnung aufweist als das Außenrohr.

8. Sensor (16, 16`, 16") nach einem der vorhergehenden Ansprüche, **dadurch gekennzeichnet, dass** die Gesamtwandstärke mindestens 3 mm beträgt.

9. Verfahren zum Herstellen eines Sensors (16, 16', 16") für eine Hochdruckleitung mit den Schritten
Bereitstellen eines Außenrohrs (5, 5') aus Metall mit einer Außenfläche, einer Innenfläche, einem Außendurchmesser und einem Innendurchmesser, Bereitstellen eines Innenrohrs (1, 1') aus Metall mit einer Außenfläche, einer Innenfläche, einem Außendurchmesser und einem Innendurchmesser,
wobei der Außendurchmesser des Innenrohrs (1, 1') kleiner ist als der Innendurchmesser des Außenrohrs (5, 5'),
wobei eine Gesamtwandstärke gemessen als eine Hälfte einer Differenz zwischen dem Außendurchmesser des Außenrohrs (5, 5') und dem Innendurchmesser der Innenrohrs gleich oder größer als der Innendurchmesser des Innenohrs (1, 1') ist, Einbringen zumindest einer sich in einer Längsrichtung des Außenrohrs (5') oder des Innenrohrs (1) erstreckenden Nut (4, 13) zumindest in die Innenfläche des Außenrohrs (5') oder in die Außenfläche des Innenrohrs (1),
wobei das Verfahren weiterhin die Schritte aufweist
Anordnen mindestens einer Signalleitung (7) in der Nut (4, 13),
Anordnen mindestens eines mit der Signalleitung (7) verbundenen Aufnehmers (8) zumindest in der Nut (4, 13) oder in zumindest einer zumindest in die Außenfläche des Innenrohrs (1) oder in die Innenfläche des Außenrohrs (5') eingebrachten Ausnehmung (6), wobei der mindestens eine Aufnehmer (8) ein Kraftaufnehmer ist, der derart mit dem Innenrohr (1, 1') in Eingriff ist, dass er in einem Betrieb des Sensors (16, 16', 16") eine auf das Innenrohr (1, 1') ausgeübte Kraft erfasst, Einführen des Innenrohrs in das Außenrohr (5, 5'), so dass sich das Innenrohr (1, 1') in dem Außenrohr (5, 5') erstreckt, und
Ziehen des Innenrohrs (1, 1') und des Außenrohrs (5, 5') gemeinsam durch eine erste Ziehmatrize mit einer die Außenfläche des Außenrohrs formenden Werkzeuginnenfläche,
wobei ein Werkzeugdurchmesser der Werkzeuginnenfläche der ersten Ziehmatrize derart gewählt wird, dass durch das Ziehen der Innendurchmesser des Außenrohrs (5, 5') derart verringert wird, dass nach dem Ziehen das Außenrohr (5, 5') kraftschlüssig auf dem Innenrohr sitzt, so dass das Innenrohr (1, 1') und das Außenrohr (5, 5') gemeinsam ein Rohr bilden.

10. Verfahren nach dem vorhergehenden Anspruch, **dadurch gekennzeichnet, dass** durch das Ziehen des Innenrohrs (1, 1') und des Außenrohrs (5, 5') gemeinsam durch die erste Ziehmatrize eine Wandstärke des Außenrohrs (5, 5') und der Innendurchmesser des Außenrohrs (5, 5') derart reduziert werden, dass der Außendurchmesser des Innenrohrs (1, 1') um mindestens 0,01 mm und um höchstens 0,3 mm verringert wird.

11. Verfahren nach dem vorhergehenden Anspruch, **dadurch gekennzeichnet, dass** durch das Ziehen des Innenrohrs (1, 1') und des Außenrohrs (5, 5') gemeinsam durch die erste Ziehmatrize der Innendurchmesser des Innenrohrs (1, 1') nicht reduziert wird.

12. Verfahren nach einem der Ansprüche 9 bis 11, **dadurch gekennzeichnet, dass** das Bereitstellen des Innenrohrs (1) und das Einbringen der Nut (4, 13) in die Außenfläche des Innenrohrs (1) die Schritte umfasst
Bereitstellen einer Luppe aus Metall,
Ziehen der Luppe durch eine zweite Ziehmatrize mit einer die Außenfläche des Innenrohrs (1) formenden Werkzeuginnenfläche zu dem Innenrohr(1),
wobei ein Werkzeugdurchmesser der Werkzeuginnenfläche der zweiten Ziehmatrize derart gewählt wird, dass der Außendurchmesser des Innenrohrs (1) kleiner ist als der Innendurchmesser des Außenrohrs und
wobei die Werkzeuginnenfläche der zweiten Ziehmatrize mindestens einen derart nach innen vorspringenden Abschnitt aufweist, dass in die Außenfläche des Innenrohrs die mindestens eine sich in Längsrichtung des Innenrohrs (1) erstreckende Nut (4, 13) gezogen wird.

13. Verfahren nach Anspruch 12, **dadurch gekennzeichnet, dass** die Werkzeuginnenfläche der zweiten Ziehmatrize eine Mehrzahl von nach Innen vorspringenden Abschnitten aufweist, so dass eine Mehrzahl von Nuten (4) in Längsrichtung in die Außenfläche des Innenrohrs (1) gezogen wird.

14. Verfahren nach einem der Ansprüche 9 bis 13, **dadurch gekennzeichnet, dass** vor dem Schritt des Einführens des Innenrohrs (1) in das Außenrohr (5, 5') zumindest das Innenrohr (1) spanend bearbeitet wird, so dass die mindestens eine Ausnehmung (6) in der Außenfläche des Innenrohrs (1) gebildet wird, wobei sich die Ausnehmung (6) an mindestens eine Nut (4, 13) anschließt.

## Claims

1. Sensor (16, 16', 16") for a high-pressure line having
at least one transducer (8), at least one signal line (7) and a tube,
wherein the at least one transducer (8) is connected to the at least one signal line (7),
wherein the sensor (16, 16', 16") is a pressure sensor, wherein the at least one transducer (8) is a force transducer,
wherein the sensor comprises a metal outer tube (5, 5') having an outer surface (15), an inner surface (17, 17'), an outer diameter and an inner diameter and
a metal inner tube (1, 1') having an outer surface (2, 2'), an inner surface (14, 14'), an outer diameter and an inner diameter,
wherein the inner tube (1, 1') extends concentrically into the outer tube such that the inner tube (1, 1') and the outer tube (5, 5') together form the tube,
wherein a total wall thickness, measured as half the difference between the outer diameter of the outer tube (5, 5') and the inner diameter of the inner tube (1, 1'), is equal to or greater than the inner diameter of the inner tube (1, 1'),
wherein at least one groove (4, 13) extends in the inner surface (17, 17') of the outer tube (5, 5') or in the outer surface (2, 2') of the inner tube (1, 1') in a longitudinal direction of the tube,
wherein the at least one signal line (7) is arranged in the groove (4, 13),
wherein the transducer (8) is arranged at least in the groove (4, 13) or in at least one recess (6) created in addition to the at least one groove (4, 13) at least in the outer surface (2, 2') of the innertube (1, 1') or in the inner surface (17, 17') of the outertube (5, 5'),
wherein the outer tube (5, 5') sits on the inner tube (1, 1') in a force-fitting manner.

2. Sensor (16, 16', 16") according to the preceding claim, **characterised in that** the sensor
has three grooves (4, 13) extending in a longitudinal direction of the tube at least in the inner surface of the outer tube (5') or in the outer surface of the inner tube (1, 1'),
wherein at least one signal line (7) is arranged in any of the three grooves (4, 13),
wherein a respective transducer (8) connected to at least one signal line (7) is arranged at least in one of the three grooves (4, 13) or in three recesses (6) respectively adjoining one of the grooves (4, 13) and
wherein the transducers (8) are arranged in the longitudinal direction of the tube such that there is a cross-sectional plane perpendicular to the longitudinal direction of the tube, which intersects all three transducers (8).

3. Sensor (16, 16', 16") according to the preceding claim, **characterised in that** the three transducers (8) are respectively spaced apart from one another by 120° in the circumferential direction of the tube.

4. Sensor (16, 16', 16") according to claim 2 or 3, **characterised in that** the three transducers (8) are force transducers, such that the sensor (16, 16', 16") is a pressure sensor.

5. Sensor (16, 16', 16") according to the preceding claim, **characterised in that** the sensor (16, 16', 16") also has a thermometer, wherein the thermometer is arranged at least in a groove (4, 13) or in at least a recess (6) created at least in the outer surface of the inner tube (1) or in the inner surface of the outer tube (5').

6. Sensor (16, 16', 16") according to any of the preceding claims, **characterised in that** the inner tube (1, 1') is a work-hardened tube with a tensile strength of 900 N or more.

7. Sensor (16, 16', 16") according to any of the preceding claims, **characterised in that** the inner tube (1, 1') has a greater elongation than the outer tube.

8. Sensor (16, 16', 16") according to any of the preceding claims, **characterised in that** the total wall thickness is at least 3 mm.

9. Method for producing a sensor (16, 16', 16") for a high-pressure line having the steps of
Providing a metal outer tube (5, 5') having an outer surface, an inner surface, an outer diameter and an inner diameter,
Providing a metal inner tube (1, 1') having an outer surface, an inner surface, an outer diameter and an inner diameter,
wherein the outer diameter of the inner tube (1, 1') is smaller than the inner diameter of the outer tube (5, 5'),
wherein a total wall thickness, measured as half the difference between the outer diameter of the outer tube (5, 5') and the inner diameter of the inner tube, is equal to or greater than the inner diameter of the inner tube (1, 1'), creating at least one groove (4, 13) extending in a longitudinal direction of the outer tube (5') or the inner tube (1) at least in the inner surface of the outer tube (5') or in the outer surface of the inner tube (1),
wherein the method further has the steps of
Arranging at least one signal line (7) in the groove (4, 13),
Arranging at least one transducer (8) connected to the signal line (7) at least in the groove (4, 13) or in at least one recess (6) created at least in the outer surface of the inner tube (1) or in the inner surface of the outer tube (5'), wherein the at least one transducer (8) is a force transducer, which is engaged with the inner tube (1, 1') such that it detects a force exerted on the inner tube (1, 1') during operation of the sensor (16, 16', 16"), inserting the inner tube into the outer tube (5, 5'), such that the inner tube (1, 1') extends into the outer tube (5, 5'), and
Drawing the inner tube (1, 1') and the outer tube (5, 5') together through a first drawing die having a tool inner surface forming the outer surface of the outer tube,
wherein a tool diameter of the tool inner surface of the first drawing die is selected such that the inner diameter of the outer tube (5, 5') is reduced by drawing such that, after drawing, the outer tube (5, 5') sits on the inner tube in a force-fitting manner such that the inner tube (1, 1') and the outer tube (5, 5') together form a tube.

10. Method according to the preceding claim, **characterised in that** a wall thickness of the outer tube (5, 5') and the inner diameter of the outer tube (5, 5') are reduced by drawing the inner tube (1, 1') and the outer tube (5, 5') together through the first drawing die, such that the outer diameter of the inner tube (1, 1') is reduced by at least 0.01 mm and at most 0.3 mm.

11. Method according to the preceding claim, **characterised in that** the inner diameter of the inner tube (1, 1') is not reduced by drawing the inner tube (1, 1') and the outer tube (5, 5') together through the first drawing die.

12. Method according to any of claims 9 to 11, **characterised in that** providing the inner tube (1) and creating the groove (4, 13) in the outer surface of the inner tube (1) comprises the steps of
Providing a metal blank,
Drawing the blank through a second drawing die having a tool inner surface forming the outer surface of the inner tube (1) to create the inner tube (1),
wherein a tool diameter of the tool inner surface of the second drawing die is selected such that the outer diameter of the inner tube (1) is smaller than the inner diameter of the outer tube and
wherein the tool inner surface of the second drawing die has at least an inwardly protruding section such that the at least one groove (4, 13) extending in a longitudinal direction of the inner tube (1) is drawn in the outer surface of the inner tube.

13. Method according to claim 12, **characterised in that** the tool inner surface of the second drawing die has a plurality of inwardly protruding sections such that a plurality of grooves (4) is drawn in the longitudinal direction in the outer surface of the inner tube (1).

14. Method according to any of claims 9 to 13, **characterised in that** before the step of inserting the inner tube (1) into the outer tube (5, 5'), at least the inner tube (1) is machined such that the at least one recess (6) is formed in the outer surface of the inner tube (1), wherein the recess (6) adjoins at least one groove (4, 13).

## Revendications

1. Capteur (16, 16', 16") pour une conduite haute pression avec
au moins un détecteur (8), au moins une ligne de signal (7) et un tube,
dans lequel l'au moins un détecteur (8) est relié à l'au moins une ligne de signal (7),
dans lequel le capteur (16, 16', 16") est un capteur de pression, dans lequel l'au moins un détecteur (8) est un capteur de force,
dans lequel le capteur présente un tube extérieur (5, 5') en métal avec une surface extérieure (15), une surface intérieure (17, 17'), un diamètre extérieur et un diamètre intérieur et
un tube intérieur (1, 1') en métal avec une surface extérieure (2, 2'), une surface intérieure (14, 14'), un diamètre extérieur et un diamètre intérieur,
dans lequel le tube intérieur (1, 1') s'étend concentriquement dans le tube extérieur de sorte que le tube intérieur (1, 1') et le tube extérieur (5,5') forment ensemble le tube,
dans lequel une épaisseur de paroi entière est, mesurée comme une moitié d'une différence entre le diamètre extérieur du tube extérieur (5, 5') et le diamètre intérieur du tube intérieur (1, 1'), égale ou supérieure au diamètre intérieur du tube intérieur (1, 1'),
dans lequel dans la surface intérieure (17, 17') du tube extérieur (5, 5') ou dans la surface extérieure (2, 2') du tube intérieur (1, 1'), au moins une rainure (4, 13) s'étend dans un sens longitudinal du tube,
dans lequel l'au moins une ligne de signal (7) est agencée dans la rainure (4, 13),
dans lequel le détecteur (8) est agencé au moins dans la rainure (4, 13) ou dans au moins un évidement (6) introduit outre l'au moins une rainure (4, 13) au moins dans la surface extérieure (2, 2') du tube intérieur (1, 1') ou dans la surface intérieure (17, 17') du tube extérieur (5, 5'),
dans lequel le tube extérieur (5, 5') loge à force sur le tube intérieur (1, 1').

2. Capteur (16, 16', 16") selon la revendication précédente, **caractérisé en ce que** le capteur
présente trois rainures (4, 13) s'étendant au moins dans la surface intérieure du tube extérieur (5') ou dans la surface extérieure du tube intérieur (1, 1') dans un sens longitudinal du tube,
dans lequel au moins une ligne de signal (7) est agencée dans chacune des trois rainures (4, 13),
dans lequel respectivement un détecteur (8) relié à au moins une ligne de signal (7) est agencé au moins dans une des trois rainures (4, 13) ou dans trois évidements (6) contigus à respectivement une des rainures (4, 13) et
dans lequel les détecteurs (8) sont agencés dans le sens longitudinal du tube de telle manière qu'un plan de section transversale soit perpendiculaire au sens longitudinal du tube, lequel coupe tous les trois détecteurs (8).

3. Capteur (16, 16', 16") selon la revendication précédente, **caractérisé en ce que** les trois détecteurs (8) sont espacés respectivement de 120° dans le sens périphérique du tube les uns des autres.

4. Capteur (16, 16', 16") selon la revendication 2 ou 3, **caractérisé en ce que** les trois détecteurs (8) sont des capteurs de force de sorte que le capteur (16, 16', 16") soit un capteur de pression.

5. Capteur (16, 16', 16") selon la revendication précédente, **caractérisé en ce que** le capteur (16, 16', 16") présente en outre un thermomètre, dans lequel le thermomètre est agencé au moins dans une rainure (4, 13) ou dans au moins un évidement (6) introduit au moins dans la surface extérieure du tube intérieur (1) ou dans la surface intérieure du tube extérieur (5').

6. Capteur (16, 16', 16") selon l'une quelconque des revendications précédentes, **caractérisé en ce que** le tube intérieur (1, 1') est un tube écroui avec une résistance à la traction de 900 N ou plus.

7. Capteur (16, 16', 16") selon l'une quelconque des revendications précédentes, **caractérisé en ce que** le tube intérieur (1, 1') présente une extension supérieure à celle du tube extérieur.

8. Capteur (16, 16', 16") selon l'une quelconque des revendications précédentes, **caractérisé en ce que** l'épaisseur de paroi entière s'élève au moins à 3 mm.

9. Procédé de fabrication d'un capteur (16, 16', 16") pour une conduite haute pression avec les étapes consistant à
fournir un tube extérieur (5, 5') en métal avec une surface extérieure, une surface intérieure, un diamètre extérieur et un diamètre intérieur,
fournir un tube intérieur (1, 1') en métal avec une surface extérieure, une surface intérieure, un diamètre extérieur et un diamètre intérieur,
dans lequel le diamètre extérieur du tube intérieur (1, 1') est inférieur au diamètre intérieur du tube extérieur (5, 5'),
dans lequel une épaisseur de paroi entière est, mesurée comme une moitié d'une différence entre le diamètre extérieur du tube extérieur (5, 5') et le diamètre intérieur du tube intérieur, égale ou supérieure au diamètre intérieur du tube intérieur (1, 1'), introduire au moins une rainure (4, 13) s'étendant dans un sens longitudinal du tube extérieur (5') ou du tube intérieur (1) au moins dans la surface intérieure du tube extérieur (5') ou dans la surface extérieure du tube intérieur (1),
dans lequel le procédé présente en outre les étapes consistant à
agencer au moins une ligne de signal (7) dans la rainure (4, 13),
agencer au moins un détecteur (8) relié à la ligne de signal (7) au moins dans la rainure (4, 13) ou dans au moins un évidement (6) introduit au moins dans la surface extérieure du tube intérieur (1) ou dans la surface intérieure du tube extérieur (5'), dans lequel l'au moins un détecteur (8) est un capteur de force qui est en prise avec le tube intérieur (1, 1') de telle manière qu'il détecte dans un fonctionnement du capteur (16, 16', 16") une force exercée sur le tube intérieur (1, 1'), introduire le tube intérieur dans le tube extérieur (5, 5') de sorte que le tube intérieur (1, 1') s'étende dans le tube extérieur (5, 5'), et
tirer le tube intérieur (1, 1') et le tube extérieur (5, 5') ensemble par une première matrice de traction avec une surface intérieure d'outil formant la surface extérieure du tube extérieur,
dans lequel un diamètre d'outil de la surface intérieure d'outil de la première matrice de traction est choisi de telle manière que le diamètre intérieur du tube extérieur (5, 5') soit diminué par la traction de telle manière qu'après la traction, le tube extérieur (5, 5') loge à force sur le tube intérieur de sorte que le tube intérieur (1, 1') et le tube extérieur (5, 5') forment ensemble un tube.

10. Procédé selon la revendication précédente, **caractérisé en ce qu'**une épaisseur de paroi du tube extérieur (5, 5') et le diamètre intérieur du tube extérieur (5, 5') sont réduits par la traction du tube intérieur (1, 1') et du tube extérieur (5, 5') ensemble par la première matrice de traction de telle manière que le diamètre extérieur du tube intérieur (1, 1') soit réduit d'au moins 0,01 mm et d'au plus 0,3 mm.

11. Procédé selon la revendication précédente, **caractérisé en ce que** le diamètre intérieur du tube intérieur (1, 1') n'est pas réduit par la traction du tube intérieur (1, 1') et du tube extérieur (5, 5') ensemble par la première matrice de traction.

12. Procédé selon l'une quelconque des revendications 9 à 11, **caractérisé en ce que** la fourniture du tube intérieur (1) et l'introduction de la rainure (4, 13) dans la surface extérieure du tube intérieur (1) comportent les étapes consistant à
fournir une loupe en métal,
tirer la loupe par une seconde matrice de traction avec une surface intérieure d'outil formant la surface extérieure du tube intérieur (1) au tube intérieur (1),
dans lequel un diamètre d'outil de la surface intérieure d'outil de la seconde matrice de traction est choisi de telle manière que le diamètre extérieur du tube intérieur (1) soit inférieur au diamètre intérieur du tube extérieur et
dans lequel la surface intérieure d'outil de la seconde matrice de traction présente au moins une section en saillie vers l'intérieur de telle manière que dans la surface extérieure du tube intérieur, l'au moins une rainure (4, 13) s'étendant dans le sens longitudinal du tube intérieur (1) soit tirée.

13. Procédé selon la revendication 12, **caractérisé en ce que** la surface intérieure d'outil de la seconde matrice de traction présente une pluralité de sections en saillie vers l'intérieur de sorte qu'une pluralité de rainures (4) soit tirée dans le sens longitudinal dans la surface extérieure du tube intérieur (1).

14. Procédé selon l'une quelconque des revendications 9 à 13, **caractérisé en ce qu'**avant l'étape d'introduction du tube intérieur (1) dans le tube extérieur (5, 5'), au moins le tube intérieur (1) est usiné par enlèvement de copeaux de sorte que l'au moins un évidement (6) soit formé dans la surface extérieure du tube intérieur (1), dans lequel l'évidement (6) est contigu à au moins une rainure (4, 13).
